# EUROPEAN PATENT APPLICATION

(11) **EP 1 278 394 A1**
(43) Date of publication of application: **22.01.2003**
(21) Application number: 01117384.6
(22) Date of filing: 18.07.2001
(51) Int. Cl.: H04R 1/10, H04M 1/05, H04B 1/38

(54) **A wireless earphone**

(71) Applicant: EVERSPRING INDUSTRY CO. LTD., Sec. 1, Tu Cheng City, Taipei Hsien (TW)
(72) Inventor: Kao, Eric, Tu Cheng City, Taipei, Hsien (TW)
(74) Representative: Viering, Hans-Martin, Dipl.-Ing.

(57) **Abstract**

The present invention relates to a wireless earphone, which mainly comprises a main part of the wireless earphone, a sunken part, a hole which are set on the top of the main part, several slots and position holes which are set around the sunken part to make the upper cover be positioned and joined. Therefore, the upper cover is easy to be assembled and disassembled. In addition, a base is extended form the bottom of the main part and further has a rotating part, which can rotate, inside. A channel is set on the rotating part to let the ear-hanger be inserted into the channel and be able to rotate in the channel such that the ear-hanger can be hanged at the left/right ear of the user and can be adjusted properly due to thickness of the user's ear style. The hole of the top of the main part can be joined with a position set. A joining hole is set on the position set to be joined with a head-ring and make the head-ring rotate in the joined hole such that the head-ring also can be adjusted to make the user can choose a wireless earphone of ear-hang type or headphone type due to his/her requirement.

## Description

### BACKGROUND OF THE INVENTION

### 1. Field of the invention

The present invention relates to a wireless earphone, especially a wireless earphone having both types of ear-hang earphone type or headphone type. The wireless earphone can be adjusted properly to fit the user's ear style.

### 1. Description of the prior art

In order to reduce the disadvantage of rising probability of traffic accidents due to holding a cellular phone under driving, now every country has made related laws to forbid holding a cellular phone to talk with others under driving to lower the happening opportunity of traffic accidents. Therefore, in order to adapt to the laws of the government, some related products are invented. Among these products, the most commonly seen product is the handfree kit. The using method is that the user first has to place the cellular phone on the holder of the handfree kit before driving, and when the user receives a calling, the communication message is broadcasted via the speaker of the device or the speaker system of the mobile. The method can make the driver talk with others without holding a cellular phone, however, due to that the handfree kit is connected to the speaker inside the mobile, the communication between the driver and others has too much noise and echo such that the incoming communication content is not clear to be heard. Besides, as long as there are other passengers, personal matters are known by others. Therefore, the handfree kit of mobiles is really not a perfect design.

In order to solve the problems resulting from handfree kit of mobiles, ear-hang earphones and headphones, which are used by the method of hanging on the user's ears or around the user's head to avoid that echo is too loud and the personal matters are known, are available. However, commonly sold ear-hang earphones or headphones are shaped together with wireless earphone such that the angle of earphone can't be adjusted properly due to the user's ear style or head style and, thus, it is discomfortable for the user to put on the earphone. Therefore, it is the emergenciest matter to design an adjustable wireless earphone which can serve as both ear-hang earphone and headphone.

Therefore, the commonly used products still have many disadvantages and are not perfect designs and require being improved.

The inventor of the present invention ruminated over the disadvantages resulted from the products described above and earnestly deliberated the way of improvement and innovation. After studying hard for a long period, the inventor eventually succeeded in inventing the present invention, a wireless earphone.

### SUMMARY OF THE INVENTION

The purpose of the present invention is to provide a wireless earphone, wherein an upper cover covers on the top of main part of the wireless earphone and can be easily assembled and disassembled such that users can change covers having different colors due to their mood and, thus, the appearance of the wireless earphone has a brilliant, gorgeous vision and sense effect.

The second purpose of the present invention is to provide a wireless earphone whereof a ear-hanger can be plugged into the channel of the rotating part to be adjusted properly due to thickness of the user's ears such that users can put on earphones comfortably.

The third purpose of the present invention is to provide a wireless earphone wherein the ear-hanger can be plugged into the left or right side of the bottom of the main part such that the main part can be hanged at the user's left ear or right ear due to user's requirement.

Another purpose of the present invention is to provide a wireless earphone wherein a position set is combined on the top surface of the main part to make the head-ring be able to be joined and rotate on the position set. In this way, the head-ring is adjustable and can be adjusted due to the user's head style such that the function of putting on the earphones comfortably is achieved.

The other purpose of the present invention is to provide a wireless earphone that the user can select the one to serve as an ear-hang earphone or a headphone due to their requirements.

The wireless earphone which can achieve the purposes described above mainly comprises a main part of the wireless earphone and an upper cover. A receiving part is set on the top of the main part while a calling part is set on the bottom. A sunken part and a hole are set on the top of the main part. Some slots are set around the sunken part. Besides, some position holes are set on the sunken part to be joined with the upper cover. The modeling of the upper cover adapts to the shape of the sunken part. In addition, some position columns, which are homologous to the position holes of the sunken part of the main part, are set at the bottom while some plugging plates, which are homologous to the slots of the sunken part of the main part, are set around the upper cover. The upper cover is covered above the sunken part of the base and joined with the sunken part by respectively joining the position columns and plugging plates of the upper cover with the slots and the position holes of the sunken part. The joining method can make the upper cover be easily assembled with or disassembled from the sunken part of the main part. A base is extended from the bottom of the main part, and a rotating part which having a channel is combined into the base. The channel of the rotating part juts out of the openings of two sides of the base to make the ear-hanger be able to be inset into the channel of the rotating part and be rotated to be adjusted due to the thickness of the user's ear style such that the function of putting on earphones comfortably is achieved. Otherwise, a position set can be combined via the hole on the top of the main part. A joining hole is set on the position set and is used to join the ball-fastener of one end of the head-ring such that the ball-fastener can rotate on the position set and thus the earphone is adjustable. The user can choose to use the wireless ear-hang earphone or headphone.

### BRIEF DESCRIPTION OF THE DRAWINGS

The drawings disclose an illustrative embodiment of the present invention which serves to exemplify the various advantages and objects hereof, and are as follows:
FIG.1 A, B, C Diagram of assembly of the main part of the present invention, a wireless earphone;
FIG.2 Diagram of the combination of the wireless earphone and the ear-hanger;
FIG.3 Diagram of the combination of the wireless earphone and the head-ring;

### [Diagram Remarks]

- 1: Main part
- 11: Sunken part
- 12: Hole
- 13: Volume control button
- 14: Slot
- 15: Position hole
- 16: Receiving part
- 17: Calling part
- 18: Base
- 19: Openning
- 2: Upper cover
- 21: Plug plate
- 22: Position column
- 23: Hole
- 31: Plane
- 32: Clip groove
- 4: Rotating part
- 41: Channel
- 5: Ear-hanger
- 51: Plugging bar
- 52: hanging part
- 6: Position set
- 61: Joining hole
- 62: Incline
- 63: Clipping groove
- 7: Head-ring
- 71: Fastener
- 72: Extension part

### DETAILED DESCRIPTION OF THE PREFERRED EMBODIMENT

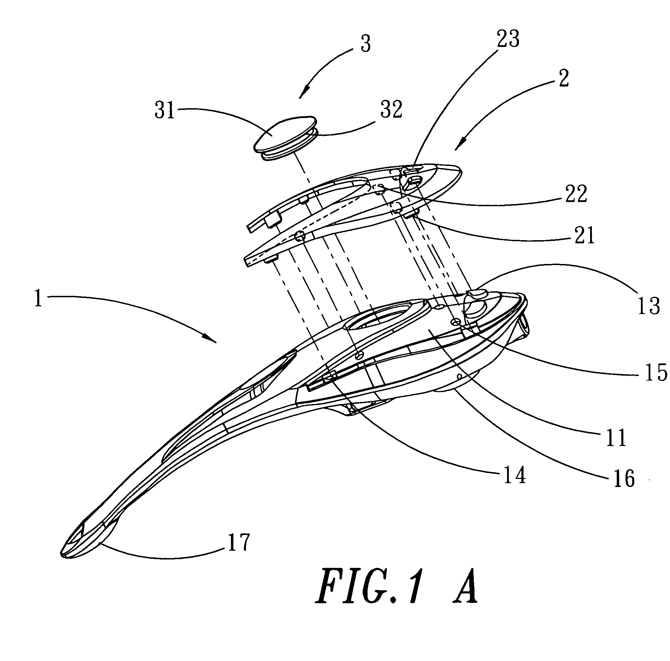

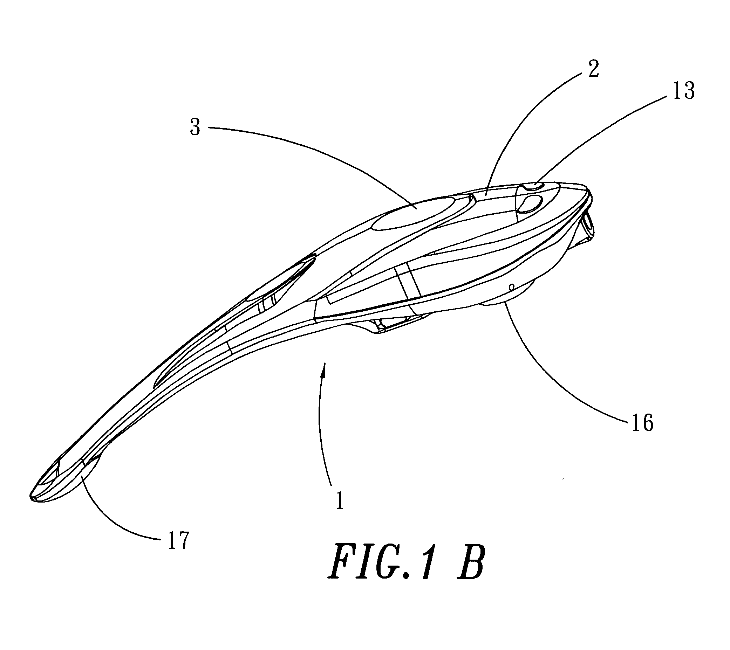

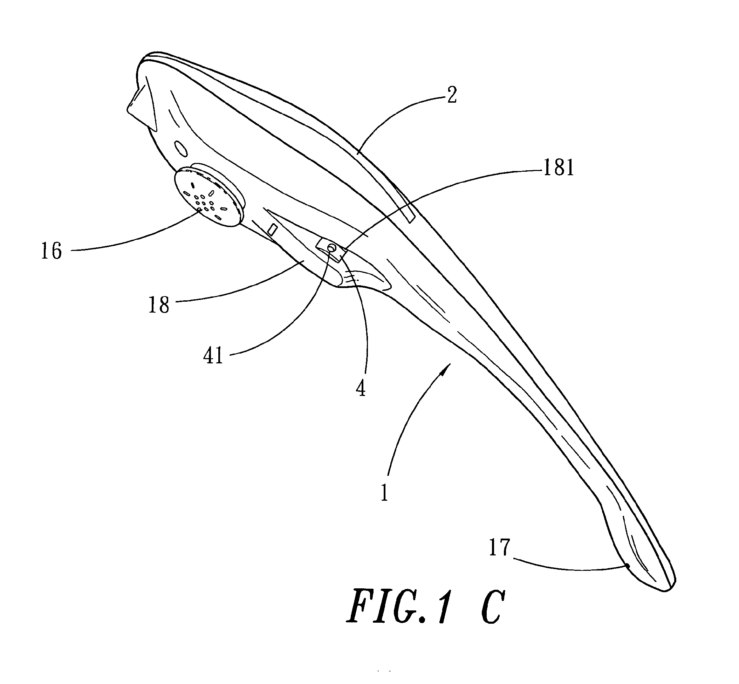

Please refer to FIG. 1 A, B, C, which is the diagram of assembly of the main part of the present invention, a wireless earphone. The present invention drawn in the diagram mainly comprises a main part 1 of the wireless earphone, and the main part 1 further comprises a receiving part 16 set at the front end while a calling part 17 set at the rear end, a sunken part 11 and a hole 12 set at the front edge of the top. Besides, four slots 14 are set around the sunken part 11, and some position holes 15 are set on the sunken part 11, too. Two volume control buttons 13 jut out the sunken part 11. A base 18 extends from the belly of the main part 1, and two openings 181 are relatively set at two sides of the base 18. A rotating part 4 is joined together with the base 18 and can rotate in the base 18. A channel 41 is set in the rotating part 4 and sticks out the openings 181 at two sides of the base 18.

An upper cover 2 has the modeling adapted to the shape of the sunken part 11 and has various colors. Besides, for the upper cover 2, several position columns 22 are set at the bottom while four plugging plates are set at the edge. The position columns 22 and the plugging plates 21 are corresponding to the position holes 15 and the slots 14 of the sunken part 11. In addition, two holes 23 are set at the front edge to let the volume control buttons jut out. For a rubber cushion 3, a plane 31 is at the top, and a clip groove 32 is set at the bottom. In this way, the rubber cushion 3 can be clipped with the hole 12 of the main part 1. The upper cover 2 is covered above the sunken part 11 of the main part 1 to make the position columns 22 at the bottom of the upper cover 2 be joined with the position holes 15 of the sunken part 11 while the plugging plates 21 of the upper cover 2 are inserted into the slots 14 at the edge of the sunken part 11 such that the upper cover 2 can be located on the sunken part 11 of the main part 1 and arranged in uniform state with the top surface of the main part 1. Therefore, due to the inserting method described above, the upper cover 2 can be assembled and disassembled easily and it is not easy to depart the upper cover 2 from the main part 1 as long as the upper part 2 and the sunken part 11 are joined together.

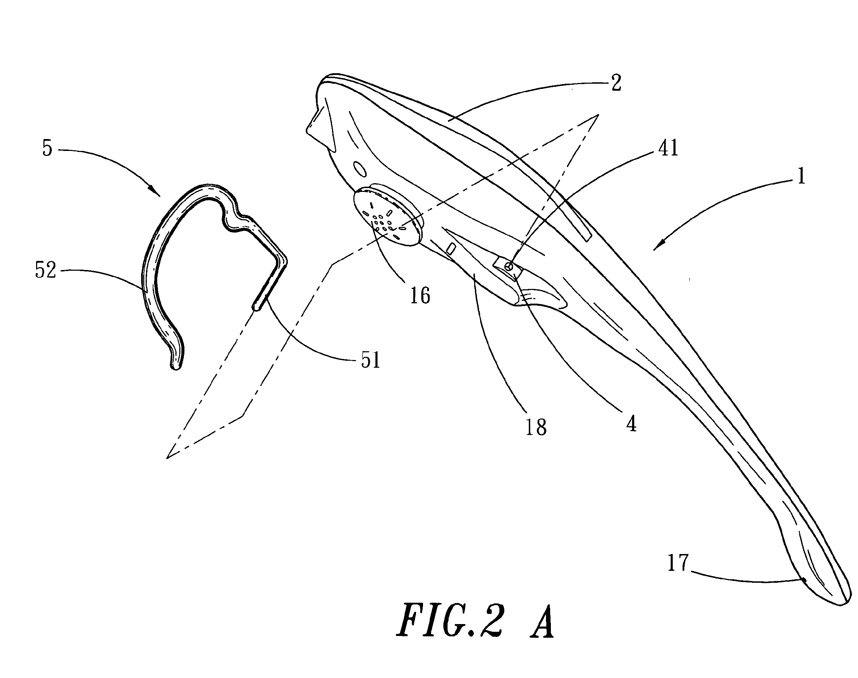

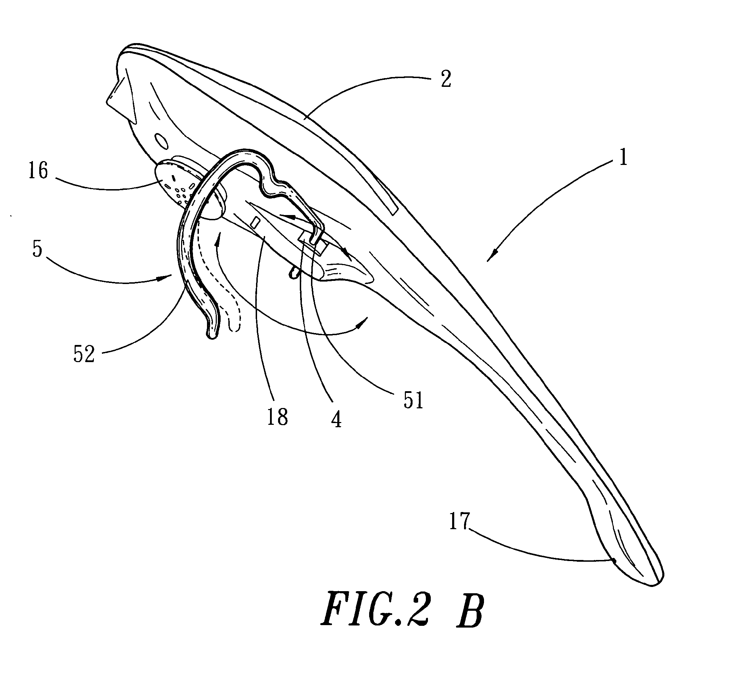

Please refer to FIG.2 A, B, which is the diagram of the combination of the wireless earphone and the ear-hanger. When the user intends to choose the ear-hang earphone to communicate, he/she can insert the plugging bar 51 of the ear-hanger 5 into the channel 41 of the rotating part of the base 18 of the main part to rotate in the channel 41 such that the ear-hanger 5 can have the function of that the angle is adjustable due to that the ear-hanger 5 and the rotating part can rotate. Therefore, the ear-hanger can adapt to the thickness of the user's ear style and can be adjusted. In addition, the hanging part 52 is flexible, and can be bent according to the human's ear style such that the ear-hanger can be hanged on the user's ear steadily and comfortably and does not result in the disadvantages of discomfort and coming off. Otherwise, the ear-hanger 5 can be inserted at the left or right side due to the requirement of the user such that the user can put on the earphone at the left ear or right ear.

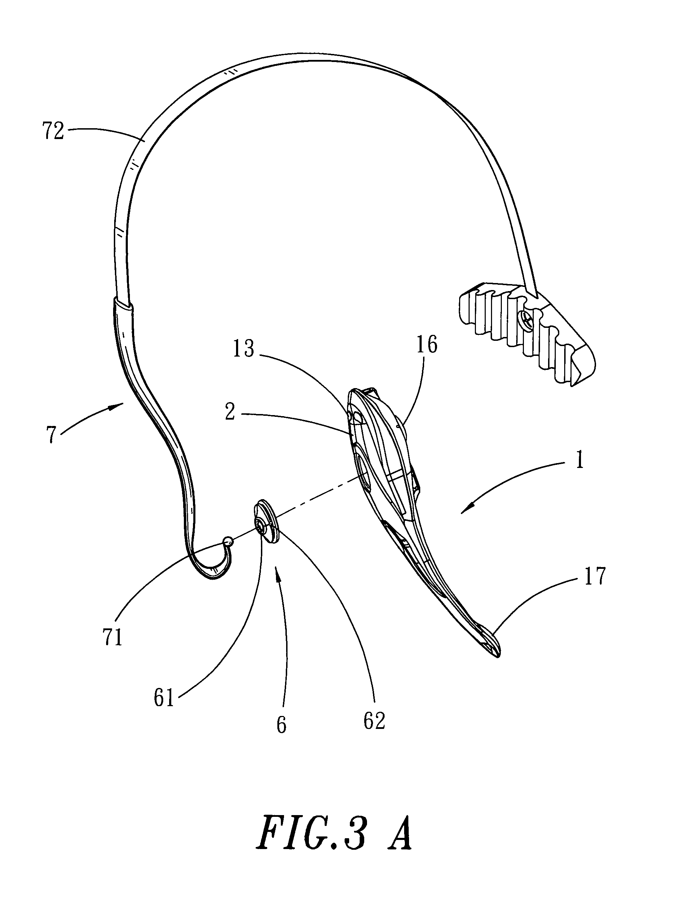

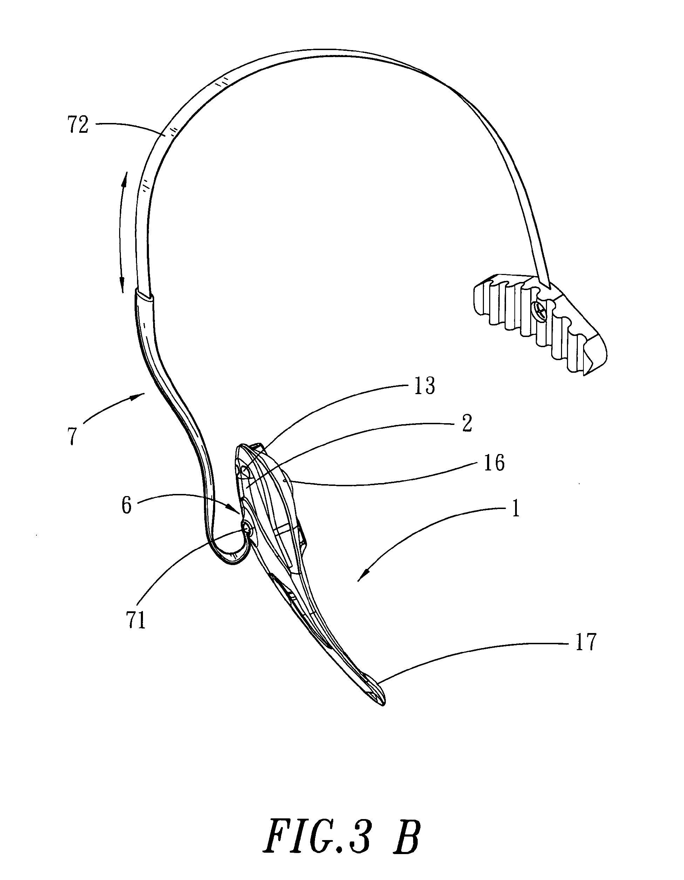

Please refer to FIG.3, which is the diagram of the combination of the wireless earphone and the head-ring. When the user intends to select the type of headphone, the user has to take out the rubber cushion 3 combined with the hole 12 at the top of the main part 1, and then join the position set 6 at the hole 12 at the top of the main part 1. A joining hole 61 is set at the top of the position set 6 while the bottom surface of the position set 6 is an incline 62. Besides, an annular clipping groove 63 is set on the position set 6. In this way, the position set 6 can enter the main part 1 by the incline 62 at the bottom such that the annular clipping groove 63 is able to clip with the hole 12 of the main part to make the position set 6 combine steadily with the hole 12 at the top of the main part 1. In addition, joining the ball fastener 71 at one end of the head ring 7 with the joining hole 61 of the position set 6 makes the ball fastener 71 be able to rotate in the joining hole 61 such that the head-ring is adjustable. The head-ring 6 has an extension part 72, which can be extended or shortened due to the size of the user's head. When the user puts on the head-ring 7, he/she can use the lengthening and shortening function and the adjustable characteristic of the ball fastener to put on the head-ring steadily and comfortably at the user's head.

Comparing with other commonly used technologies, the wireless earphone of the present invention has the advantages as follows:
1. The present invention is a wireless earphone which can serve as ear-hang type or headphone type. No matter what method the user chooses, the wireless earphone can adapt to the user's ear style or head style and be adjusted properly to make the user put on the earphone comfortably.
2. The ear-hanger of the present invention is flexible, and is combined with the main part and can be adjusted due to thickness of the user's ear style to promote the comfort of putting on the earphone.
3. A hole is set on the top of the main part of the present invention. If the user chooses the ear-hang wireless earphone, the hole is combined with a rubber cushion to make the top of the main part be in flat state. If the user wants to change to the headphone, he/she just joins a position set with the hole to supply the connection of the head-ring such that the wireless earphone is changed to a headphone.
4. The present invention covers an upper cover which is easily assembled with and disassembled from the main part. The color of the upper cover is richly variable to let the user change the upper cover due to the mood such that the modeling of the main part has a brilliant, gorgeous vision and sense effect.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. a first wireless earphone, which at least comprises:
a first main part, wherein a sunken part is set at a top, a plurality of slots being set around said sunken part, a plurality of position holes being set on said sunken part; an upper cover, whereof a whole style is designed to fit the modeling of said sunken part, a plurality of position columns being set on said upper cover while a plurality of plugging plates being set around said upper cover, said position columns and said plugging plates are correspond to said position holes and said slots of said sunken part of said first main part;
wherein said upper cover is covered above said sunken part of said first main part to make said position columns thereon join with said position holes of said sunken part while said plugging plates around said upper cover insert into said slots around said sunken part such that said cover is steadily joined with said sunken part and is arranged in uniform with a top surface of said first main part; said upper cover can be easily assembled to and disassembled from said sunken part of said main part by a method described above.

2. a first wireless earphone as recited in claim 1, wherein a pair of volume control buttons jut out a front edgy of said sunken part of said first main part, a first pair of holes being set on a front rim of said upper cover to let said volume control buttons pass through and jut out said first holes when said upper cover is covered on said sunken part.

3. a first wireless earphone as recited in claim 1, wherein a receiving part is set at a front end while a calling part is set at a rear end of said first main part to make the user communicate with others.

4. a first wireless earphone as recited in claim 1, wherein four slots can be set around said sunken part of said main part.

5. a first wireless earphone as recited in claim 1, wherein four plugging plates are set around said upper cover.

6. a second wireless earphone, which at least comprises:
a second main part of said second wireless earphone, whereof a base is extended from a bottom of said second main part, a pair of openings being set respectively at both sides of said base, a rotating part with rotating characteristic being combined inside, a channel being set on said rotating part and jutting out said openings of both sides;
an ear-hanger, wherein one end has a plugging bar while another end has a hanging part which is flexible;
wherein said plugging bar of said ear-hanger is inset into said channel of said rotating part to make said ear-hanger be able to rotate in said channel such that the ear-hanger can have the characteristic of adjusting angle due to that said ear-hanger and said rotating part can rotate to make said ear-hanger can adapt to the thickness of user's ear style and can be adjusted properly to promote the comfortable feeling.

7. a second wireless earphone as recited in claim 6, wherein said ear-hanger can be inserted at right side of said second main part to make said second wireless earphone be able to be hanged at a human left ear.

8. a second wireless earphone as recited in claim 6, wherein said ear-hanger can be inserted at left side of said second main part to make said second wireless earphone be able to be hanged at a human right ear.

9. a second wireless earphone as recited in claim 6, wherein a hanging part at another end of said ear-hanger is flexible and can be bent to a hook-like shape due to human ear style such that when being put on, it is not easy to fall off.

10. a third wireless earphone, which at least comprises a third main part of said wireless earphone, a position set, and a head-ring,
wherein a second hole is set on said third main part, said position set being joined to said hole of said third main part, a joined hole being set at a upper surface of said position set to make a fastener of said head-ring be able to clip with and rotate in said joining hole to let an angle of said head-ring be adjustable such that when said third wireless earphone is put on, said angle of said head-ring can be adjusted properly due to human's head style.

11. a third wireless earphone as recited in claim 10, wherein a bottom surface of said position set is an incline while a annular clipping groove is set on said position set to make said position set can enter said second hole of said third main part via said incline of said bottom surface such that said annular clipping groove can clip with said second hole of third main part to make said position set joined steadily on a top of third main part.

12. a third wireless earphone as recited in claim 10, wherein said fastener can be made in a ball style to rotate in said joining hole of position set.

13. a third wireless earphone as recited in claim 10, wherein said head-ring has a extension part which can be extended or shortened due to a size of human's head style such that when being put on, said head ring is not easy to fall off.
